# EUROPEAN PATENT SPECIFICATION

(11) **EP 0 390 259 B1**
(45) Date of publication and mention of the grant of the patent: **20.09.1995**
(21) Application number: 90200674.1
(22) Date of filing: 22.03.1990
(51) Int. Cl.: G11B 11/10

(54) **Device for inscribing and/or reading a magneto-optical information carrier**
Einrichtung zum Einschreiben und/oder Auslesen eines magnetooptischen Informationsträgers
Dispositif d'enregistrement et/ou de lecture d'un support d'information magnéto-optique

(30) Priority: 28.03.1989 NL 8900751
(43) Date of publication of application: 03.10.1990
(73) Proprietor: Philips Electronics N.V., 5621 BA Eindhoven (NL)
(72) Inventor: Hensing, Johannes Martinus Maria, NL-5656 AA Eindhoven (NL); Hezemans, Cornelius Antonius, NL-5656 AA Eindhoven (NL)
(74) Representative: Schrijnemaekers, Hubert Joannes Maria

(56) References cited:
- EP-A- 0 307 130
- JP-A-64 066 848
- PATENT ABSTRACTS OF JAPAN vol. 13, no. 82 (P-833)(3430) 23 February 1989,& JP-A-63 263651 (FUJI ELECTRIC CO. LTD.) 31 October 1988,
- PATENT ABSTRACTS OF JAPAN vol. 12, no. 468 (P-797)(3315) 08 December 1988,& JP-A-63 187443 (TOSHIBA CORP.) 03 August 1988,
- PATENT ABSTRACTS OF JAPAN vol. 10, no. 327 (P-513)(2383) 07 November 1986,& JP-A-61 133069 (OLYMPUS OPTICAL CO. LTD.) 20 June 1986,
- PATENT ABSTRACTS OF JAPAN vol. 11, no. 109 (P-564)(2556) 07 April 1987,& JP-A-61 258354 (MATSUSHITA ELECTRIC IND. CO. LTD.) 15 November 1986,
- PATENT ABSTRACTS OF JAPAN vol. 12, no. 497 (P-806)(3344) 26 December 1988,& JP-A-63 206936 (SONY CORPORATION) 26 August 1988,
- PATENT ABSTRACTS OF JAPAN vol. 11, no. 45 (P-546)(2492) 10 February 1987,& JP-A-61 214257 (HITACHI LTD) 24 September 1986,
- PATENT ABSTRACTS OF JAPAN vol. 13, no. 345 (P-909)(3693) 03 August 1989,& JP-A-01 102760 (NEC HOME ELECTRONICS LTD.) 20 April 1989,

## Description

The invention relates to a device for inscribing and/or reading a magneto-optical information carrier, as defined in the preamble of claim 1. Such a device is known from JP-A-61-258354.

Furthermore in the prior art a device is knwon fro German Offenlegungsschrift DE 37 23 134. The prior-art device for magneto-optically inscribing a magneto-optical disc comprises a housing having a cover which can be opened and closed to insert or remove a magneto-optical disc. During operation the magneto-optical disc loaded into the housing is held on a turntable by a disc-pressure member and is rotated by a drive motor. The drive motor is secured to a frame accommodated in the housing. The housing further accommodates a slide which is movable over rectilinear guide means of the frame in a radial direction relative to the axis of rotation of the turntable. The slide is constructed as a tilted U-shaped part having two mutually parallel radial limbs. One of the limbs carries an objective for concentrating a radiation beam to form a radiation spot and the other limb carries a permanent magnet for producing a magnetic bias field. The objective and the magnet are arranged opposite one another and are each situated at one side of the magneto-optical disc which is supported by the turntable.

The information carrier to be used for magneto-optical recording is provided with a thin film of a ferromagnetic or a ferrimagnetic material having a direction of easy magnetisation perpendicular to the surface of the thin film. During recording it is necessary that the thin film is heated to a temperature above the Curie temperature, or in the case of ferrimagnetic materials to a temperature above the so-called compensation point. Recording can be effected in accordance with two methods. In accordance with a first method, for which the known device can be used, a constant magnetic bias field is applied by means of a permanent magnet and the thin film is heated by means of a pulsating laser beam. In accordance with a second method the thin film is locally heated by means of a continuous-wave or pulsed laser beam and a pulsating magnetic field is applied at the location of the thin film heated by the laser beam. The pulsating magnetic field is generated by means of an energised coil. The information recorded by means of either method is read optically, utilising the Kerr effect.

The known device cannot readily be adapted to said second method of magneto-optical recording. In principle, it is conceivable to replace the permanent magnet by a coil, but if it is required to record a large amount of information per unit of time the magnetic flux in the coil has to be minimised. A consequence of this is that the magnetic field which is produced is comparatively small so that the coil should be arranged at a very short distance from the information carrier, which is possible only if the coil is incorporated in an actuator for moving the coil in a direction parallel to the axis of rotation of the turntable. It is found that the U-shaped construction of the slide in the known device causes undesirable dynamic problems during energisation of the said actuator. The comparatively compliant construction of the known slide can be stiffened by using a heavier construction for the slide but this has the drawback that the mass of the slide becomes impermissibly large, which is incompatible with fast access times.

It is an object of the invention to provide a device of the type defined in the opening paragraph which, regardless of the method of magneto-optically inscribing an information carrier, does not cause any dynamic problems and problems as regards long access times.

To this end the device in accordance with the invention is characterized as defined in the characterizing portion of claim 1. An advantage of the device in accordance with the invention is that both slides can be of a light-weight construction, so that very short access times and accurately defined displacements are attainable. Moreover, the frame can be of a construction which is adequately stiff to preclude dynamic problems. Driving is possible by means of, for example, two stepping motors, two d.c. motors or a combination of these two types.

An embodiment of the invention is characterized in that the measurement and control system comprises an optical distance meter which is arranged on one of the slides to cooperate with a reflecting surface of the other slide and which is connected to an electronic control unit. The electronic control unit may be either a digital or an analog unit. An incremental measurement ruler with associated detector may be arranged near one of the drive units of the slides.

An embodiment comprising only a limited number of different parts is characterized in that an incremental measurement ruler and an optical detector of the measurement and control system are arranged near each of the drive units, which detectors are electronically coupled to one another by a microprocessor.

It is to be noted that JP-A-1-166848 discloses a magneto-optical device comprising a slide carrying an optical head and a slide carrying a magnetic head, both slides being jointly driven by one electric motor having a rotatable drive shaft, which is coupled to both slides via a transmission mechanism. Such a drive system has only limited possibilities as regards the attainable slide speeds and accuracy of the slide displacements, so that the attainable access times are comparatively long.

It is to be noted also that the composition and the characteristics of a magneto-optical information carrier are described in Applied Optics, Vol. 23, no. 22, 15 November 1985, pp. 3972-3978; Digital Magneto-optic disc drive, T. Deguchi c.s..

The invention will now be described in more detail, by way of example, with reference to the accompanying drawings in which:
Fig. 1 is a diagrammatic side view of a first embodiment of the device in accordance with the invention, and
Fig. 2 is a plan view of the embodiment shown in Fig. 1,
Fig. 3 shows diagrammatically the measurement and control system employed in the first embodiment,
Fig. 4 is a diagrammatic cross-sectional view showing a part of a second embodiment of the device in accordance with the invention,
Fig. 5 shows diagrammatically the measurement and control system used in the second embodiment,
Fig. 6 is a diagrammatic longitudinal sectional view showing a part of a third embodiment of the device in accordance with the invention,
Fig. 7 shows diagrammatically the measurement and control system used in the third embodiment,
Fig. 8 is a diagrammatic longitudinal sectional view of a part of a fourth embodiment of the device in accordance with the invention,
Fig. 9 shows diagrammatically the measurement and control system employed in the fourth embodiment,
Fig. 10 shows diagrammatically a part of a fifth embodiment of the device in accordance with the invention,
Fig. 11 shows diagrammatically a part of a sixth embodiment of the device in accordance with the invention,
Fig. 12 is a diagrammatic longitudinal sectional view showing a part of a seventh embodiment of the device in accordance with the invention, and
Fig. 13 shows diagrammatically the measurement and control system employed in the seventh embodiment.

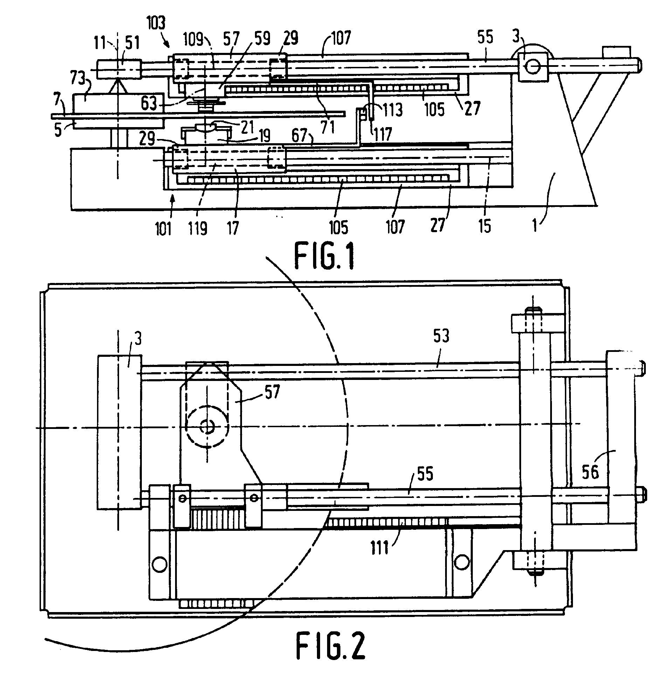

The embodiment of the device in accordance with the invention shown in Figs. 1 and 2 comprises a frame having a first frame section 1 comprising two parallel guide spindles, of which only one spindle, bearing the reference numeral 15, is shown, and a pivotable second frame section 3, or sub-frame, comprising two guide spindles 53 and 55, which engage against a stop element 56 of the frame section 1 during operation. The guide spindles of the frame section 1 serve for guiding and supporting a slide 17 and the guide spindles 53 and 55 serve for guiding and supporting a slide 57. The slide 17 carries an optical unit 19 comprising an objective 21 having an optical axis 23 and an electro-magnetic actuator for moving the objective along the optical axis 23. The electromagnetic actuator may be of a type as is disclosed in European Patent Application 0,268,311 (PHN 11.896). The objective 21 serves for focusing a radiation beam from a radiation source, not shown, for example a laser, to form a radiation spot in the information plane of the information carrier 7. The radiation source may be situated on the slide 17 or elsewhere, for example on the frame 1.

A magnetic unit 59 having a magnetic axis 63 is secured to the slide 57. The magnetic unit 59 comprises means for generating a magnetic field which extends into the information plane of the information carrier 7. Such means may comprise a permanent magnet or an induction coil. The magnetic unit may further comprise an electro-magnetic actuator for moving said means in a direction perpendicular to the information carrier 7. The magnetic unit 59, to which a magnetic axis 63 can be assigned, is situated opposite to and is spaced from the optical unit 19. The information carrier 7 is situated between the optical unit 19 and the magnetic unit 59, and at least during operation it is important that the optical axis 23 and the magnetic axis 63 are disposed in line with one another. A turntable 5, which can be driven by an electric motor and is supported in the frame section 1, carries the magneto-optical information carrier 7 at least during operation.

At the location of the connecting member 51 the frame section 3 carries a disc-pressure member 73 for pressing the information carrier 7 onto the turntable 5. During scanning of a disc a supporting point is obtained at the location of the pressure member, which adds to the stiffness of the frame during operation. To enable the information carrier 7 to be placed on or removed from the turntable the disc-pressure member can be moved away from the turntable 5 by pivoting the sub-frame 3.

The slides 17 and 57 are driven in radial directions independently of one another by a linear motor 101 and 103 respectively. Both motors 101 and 103 each comprise a stationary section or stator 27, having a magnet 105 and a stator yoke 107, and a movable section or armature 29, having one or more coils 109, the stationary section being secured to the frame and the movable section being secured to a slide.

For the purpose of position detection one of the two motors, for example the linear motor 101 is provided with an incremental measurement ruler 111 and an optical sensor which cooperates therewith. In order to guarantee an optimum cooperation between the optical unit 19 and the magnetic unit 59 during inscribing and/or reading of the magneto-optical information carrier 7 the device comprises a measurement and control system for positioning the optical unit and the magnetic unit relative to one another at least during operation. The measurement and control system comprises an optical distance meter (opto-coupler) 113 arranged on a slide member 67 of the slide 17 and a reflecting surface 117 arranged on a slide member 71 of the slide 57. The optical distance meter 113 is arranged opposite the reflecting surface 117 and is connected to an electronic control unit.

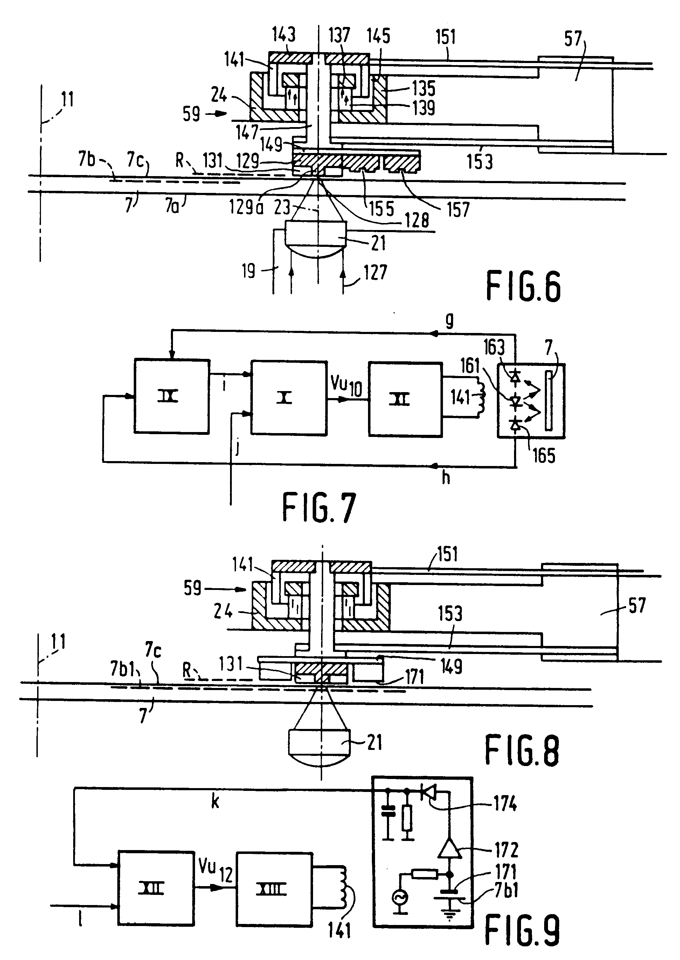

The measurement and control system employed in the device shown in Figs. 1 and 2 will be described in more detail with reference to Fig. 8. A signal a from a player control system is applied to a controller I to establish the correct initial conditions such as bringing the reflecting surface within the measurement range of the opto-coupler after the device has been switched on. Moreover, a signal b corresponding to the desired slide position (set-point) is applied to the controller I. The optical distance meter 113 supplies a signal c to the controller I, the value of this signal being dependent on the distance from the reflecting surface 117. In the controller I the signal c is compared with the signal b, the controller ensuring that the system has the desired stability and that the slides 17 and 57 are accurately in track with one another. The controller I supplies an output voltage Vu1 to an output amplifier II, which drives the coil 109 of the linear motor 107.

In the embodiments to be described hereinafter parts corresponding to those in the first embodiment bear the same reference numerals.

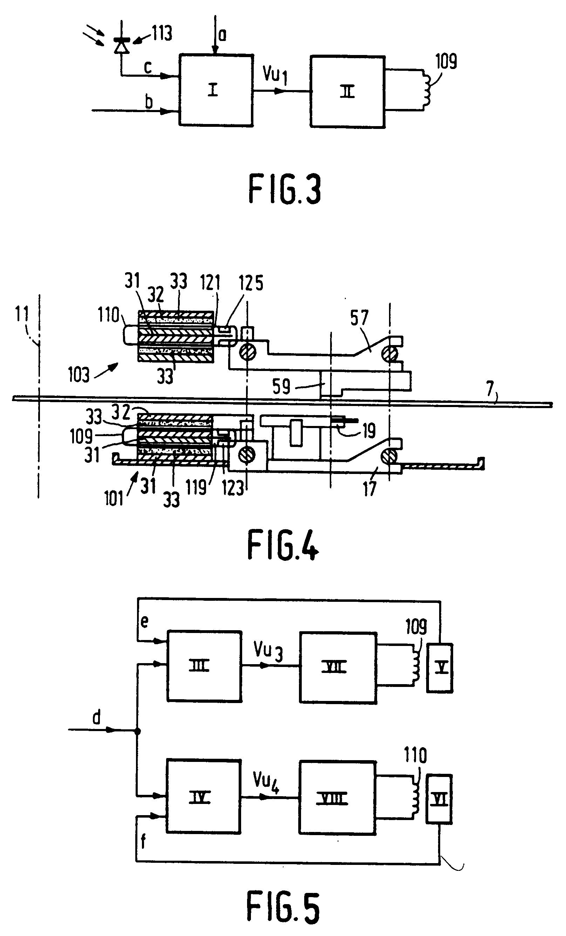

The part of the second embodiment of the device in accordance with the invention shown in Fig. 4 comprises a slide 17 carrying an optical unit 19 and a slide 57 carrying a magnetic unit 59. The two slides are guided similarly to those in the embodiment already described hereinbefore. Each slide is driven by a separate linear motor, 101 and 103 respectively, comprising central stator plates 31 and linkage plates 32 with magnets 33, as well as armature plates 109 and 110 respectively. Each motor is provided with an incremental measurement ruler 119 and 121 respectively and an optical detector 123 and 125 cooperating therewith. The optical detectors 123 and 125 each have two emitters at one side of the relevant optical incremental ruler and two receivers at the other side of the relevant ruler and are electronically coupled to one another by a microprocessor.

The measurement and control system of the device shown in Fig. 4 will be described in greater detail with reference to Fig. 5. The measurement and control system comprises two controllers III and IV, a player control system supplying a signal d related to the desired slide position to each of said controllers. A position-measurement unit represented by V and VI, is coupled to the controllers III and IV respectively. From the position-measurement unit V the controller III receives a signal e which is related to the actual position of the slide 17 and from the position-measurement unit VI the controller IV receives a signal f which is related to the actual position of the slide 57. The controllers III and IV provide the desired stability of the two parallel sub-systems and the desired tracking accuracy, the signals d and e being compared with one another in the controller III and the signals d and f being compared with one another in the controller IV. The controllers III and IV apply an output voltage Vu3 and Vu4 respectively to an output amplifier VII and VIII respectively. The output amplifier VIII energises the coil 109 of the linear motor 110 and the output amplifier VIII energises the coil 104 of the linear motor 103.

The embodiment of the device in accordance with the invention which is shown in part in Fig. 6, is a modification of the device as shown in Figs. 1 and 2 and, similarly to that already described, it comprises a frame, a sub-frame, a slide carrying an optical unit 19, and a slide 57 carrying a magnetic unit 59. For a comprehensive description of these parts of the device reference is made to the paragraphs relating to Figs. 1, 2 and 4. Fig. 6 shows the objective 21 of the optical unit 19, which objective has an optical axis 23. The object 21 is arranged at the transparent side 7a of a magneto-optical disc 7, which is rotatable about an axis of rotation 11. The magneto-optical disc 7 comprises a composite information layer 7b. By means of the objective a radiation beam 127, which is directed to the objective, can be converged to form a radiation spot 128 in the information layer 7b. A magnetic unit 59 is arranged opposite the objective 21, at the other side of the optical information carrier 7. In the present embodiment the magnetic unit comprises a coil 131, arranged on a support 129, and an electro-magnetic actuator 24 for moving the coil 131 in a direction parallel to the axis of rotation 11 of the turntable 5 (Fig. 1). The support 129 is suitably made of a ferrite and has a central portion 129a which is directed towards the objective 21 and which carries the coil 131. When the coil 131 is energised a magnetic field is produced such that the lines of field emerge from the central portion 129a and intersect the information layer 7b substantially perpendicularly. The actuator 24 comprises an axially magnetised magnet 139 arranged between magnetically conductive portions 135 and 137. The actuator 128 further comprises an actuator coil 141, which is secured to a coil holder 143 and which is axially movable in an annular air gap 145 bounded by the portions 135 and 137. The coil holder 143 is secured to an actuator spindle 147 whose end which is remote from the coil holder 143 is provided with a supporting element 149 to which the support 129 is secured. The actuator portions 135, 137 and 139 are secured directly to the slide 57 and the portions 141, 143 and 147 are together supported by two leaf springs 151 and 153 secured to the slide 57.

The device shown in Fig. 6 further comprises a measurement and control system for determining, during operation of the device, the distance between a reference plane of the magnetic unit 59, for example the side of the coil 131 of the central portion 129a facing the objective and bearing the reference R in the Figure, and the side 7c of the information carrier 7 facing the magnetic unit. The measurement and control system also serves for adjusting the desired position of the coil 131. The measurement and control system which is used comprises two juxtaposed optical detectors 155 and 157 which are secured to the supporting element 149 and together are situated adjacent the coil 131. The two optical detectors 155 and 157 together form an emitter for emitting an optical beam and two receivers for receiving the radiation reflected from the side 7c of the information carrier 7.

The measurement and control system used in the device shown in Fig. 6 will be described in greater detail with reference to the block diagram shown in Fig. 7. The emitter mentioned in the preceding paragraph bears the reference numeral 161 and the two receivers bear the reference numerals 163 and 165. The receiver 163 is a reference diode and the receiver 165 is a measurement diode. The magneto-optical information carrier bears the reference numeral 7. A reference current g from the reference diode 163 and a measurement current h from the measurement diode 165 are applied to a unit IX. The unit IX supplies a normalised signal i, which is applied to a controller X. A signal i which is related to the desired position of the coil 131, is applied to the controller X by a player control system. The controller X provides the desired stability of the system and controls the desired distance from the optical disc 7, the signals i and j being compared with one another in the controller X. The controller X supplies an output voltage Vu10 to an output amplifier XI. The coil 141 of the actuator 24 is energised by the output amplifier XI.

The embodiment of the device in accordance with the invention, which is shown in part in Fig. 8, is also a modification of the device as shown in Figs. 1 and 2. The principal difference with the embodiment shown in Fig. 6 is that the present embodiment comprises a capacitive detector 171 instead of the optical detectors 155 and 157. The capacitive detector 171 comprises an electrically conductive ring, for example made of phosphor-bronze, and cooperates with a conductive layer 7b1, which may be one of the constituent layers of the information layer 7b. For the remainder the construction and mechanical operation of this embodiment may be similar to that shown in Fig. 6. For a more detailed description of this embodiment reference is made to the paragraphs relating to Fig. 6. The capacitive detector 171 forms part of a measurement and control system for determining, during operation of the device, the distance between a reference surface of the magnetic unit 59, for example the side of the coil 131 facing the objective 21 and bearing the reference R in the Figure, and the side 7c of the information carrier 7 facing the magnetic unit, the system also serving to control the desired position of the coil 131. The capacitive detector 171 is secured to the supporting element 149 of the actuator 24.

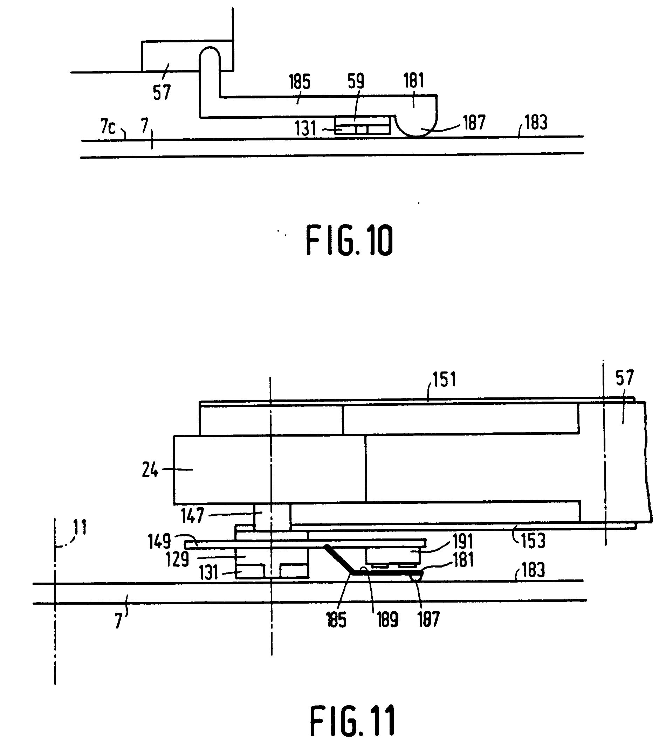

Fig. 9 shows the block diagram of the measurement and control system employed in the device shown in Fig. 8. In said Figure the capacitive detector has the reference numeral 171 and the conductive layer of the information carrier bears the numeral 7b1. The detector 171 supplies a measurement signal which is related to the actual position of the coil 131 and which is applied to a buffer amplifier 172 and subsequently rectified by a rectifier 174. The rectified measurement signal k is applied to a controller XII and in the controller XII it is compared with a signal l related to the desired position. The controller XII supplies an output voltage Vu12 and is electrically connected to an output amplifier XIII. The output amplifier XIII energises the coil 141 of the actuator 24.

Fig. 10 shows a part of a further embodiment of the invention. This embodiment is again a modification of the device as shown in Figs. 1 and 2. The measurement and control system in the present embodiment comprises a mechanical detector 181 for cooperation with a peripheral surface 183 of the information carrier 7. The mechanical detector comprises a supporting arm 185 which is pivotally secured to the slide 57 and which carries a slip contact 187 which bears on the information carrier during operation. The supporting arm 185 carries the magnetic unit 59, which comprises a coil 131. During operation the slip contact 187 follows the peripheral surface 183 of the rotating information carrier 7, to detect irregularities in this peripheral surface, which causes a pivotal movement of the supporting arm 185. The coil 131 of the magnetic unit 59, which coil is arranged on the supporting arm 185, follows the movements of the pivotal arm, thereby guaranteeing a predetermined distance between the coil 131 and the peripheral surface 7c of the information carrier 7.

The part of the sixth embodiment of the device in accordance with the invention shown in Fig. 11 is a modification of the part shown in Fig. 6. The present embodiment comprises an actuator 24, which may be of a construction similar to that of the actuator shown in Fig. 6. The actuator 24 is connected partly directly to the slide 57 and partly via two blade springs 151 and 153 and comprises an axially movable actuator shaft 157 with a supporting element 149. The supporting element carries a coil former 129, made of for example a ferrite, with a coil 131 for producing a magnetic field. This embodiment further comprises a mechanical detector 181, which is pivotally connected to the supporting element 149 and which is provided with a slip contact 187 which in operation engages with a peripheral surface 183 of a rotating information carrier 7. The mechanical detector 181 further comprises a supporting arm 185 having a reflecting surface 189. An optical sensor 191 secured to the supporting element 149 is arranged opposite the reflecting surface 189 to detect excursions of the slip contact 187. The optical sensor 191 forms part of a measurement and control system for controlling the desired position of the coil 131. The measurement and control system is comparable to the system shown in Fig. 7. Since the reflecting surface 181 can be uniquely defined it is not necessary to provide a reference diode.

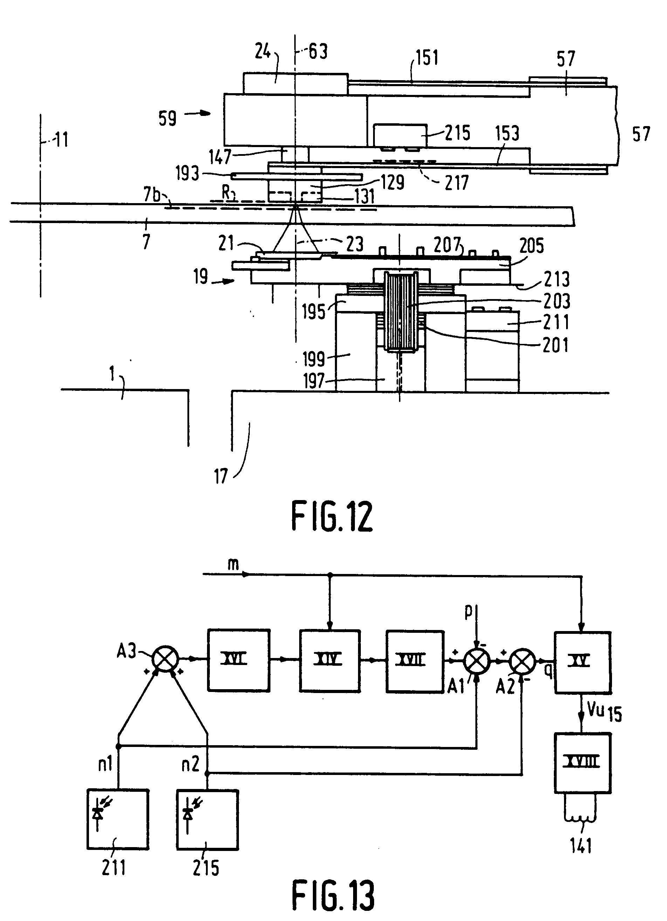

Fig. 12 shows a part of the seventh embodiment of the device in accordance with the invention. This embodiment is another modification of the device as shown in Figs. 1 and 2. The embodiment comprises a slide 17 carrying an optical unit 19 and a slide 57 carrying a magnetic unit 19. The slide 17 is supported in a frame section corresponding to the frame section 1 of the device shown in Figs. 1 and 2, and the slide 57 is supported in a pivotable sub-frame corresponding to the frame section 3 in the device shown in Figs. 1 and 2. The magnetic unit 19 comprises an actuator which is similar to the actuator 24 of the device shown in Fig. 6. The actuator comprises a stationary section, which is secured directly to the slide 57, and a movable section, which is connected to the slide 57 by blade springs 151 and 153. The actuator 24 comprises an actuator spindle 157 which is movable along its longitudinal axis and which carries a magnetically shielding plate 193, suitably made of a µ-metal. The actuator spindle 147 further carries a ferrite coil former 129 with a coil 131 for generating a fluctuating magnetic field.

The optical unit 19 comprises an actuator 195, which comprises a stationary section, comprising with a permanent magnet 197 and a magnetic yoke 199, and a movable section, comprising with a focusing coil 201 and tracking coils 203. The movable section of the actuator 195 further comprises a supporting member 205, in which an objective 21 having an optical axis 23 is mounted. At its side which faces the magnetic unit 59 the optical unit 19 may be magnetically shielded by means of a µ-metal plate 207, which is for example disc-shaped or annular.

The device shown in Fig. 12 comprises a measurement and control system comprising a sensor 211 for detecting the position of the objective 21 relative to the frame 1. The sensor 211, which in the present example is an optical distance detector, is secured to the stationary section of the actuator 195 and cooperates with a reflecting surface 213 provided on the supporting member 205 of the movable part of the actuator 195, which member is movable along the optical axis 23. The stationary section of the actuator 24 or the directly adjoining part of the slide 57 carries a further sensor 215, in the present embodiment also an optical distance detector, which cooperates with a reflecting surface 217, which in the present example is provided on the blade spring 153, which is coupled to the movable part of the actuator 24.

The measurement and control system of the device shown in Fig. 12 will now be described in greater detail with reference to the block diagram shown in Fig. 13 and the part shown in Fig. 12. By means of a player control system, not shown, a predetermined routine is carried out during starting of the device. This routine may include inter alia that the objective 21 is set to a suitable focusing position and the magnetic unit 59 is briefly pressed against the information carrier 7 to be inscribed or to be read. The signal m from the player control system activates a memory XIV. Said sensors 211 and 215, which convert the distance from the reflecting surfaces 213 and 217 respectively into voltage signals n1 and n2, are connected to a controller XV and analog-to-digital converter XVI, which is coupled to the memory XIV, via adders A1, A2 and A3, in a manner as shown in the block diagram. The memory XIV is coupled to the controller XV as shown via the adders A1 and A2 and a digital-to-analog converter XVII. Moreover, a signal p, which is related to the desired value of the distance between the magnetic unit 51, in particular its reference surface R, and the magneto-optical information carrier 7, in particular its information surface 7b, is applied to the adder A1. The signal g from the adder A2 is applied to the controller XV, the controller XV ensuring that the system has the desired stability and said desired value is maintained accurately. The controller XV is connected to an output amplifier XVIII and has an output voltage Vu15. The output amplifier XVIII drives the coil 141 (see Fig. 6) of the actuator 24 of the magnetic unit 59. This enables a measurement and control system to be realised which does not make use of the rotating information carrier 7.

## Claims

1. A device for inscribing and/or reading a magneto-optical information carrier, comprising
- a frame (1) with a turntable (5) which is rotatable about an axis of rotation for supporting the information carrier,
- a first slide (17) comprising an optical unit (19), which comprises an objective for concentrating a radiation beam to form at least one radiation spot in a focusing plane,
- a first rectilinear guide means (15) for the first slide, arranged on the frame, and a first slide-drive unit (101),
- a movable magnetic unit (59) which, viewed along said axis of rotation, is arranged opposite to and spaced from the optical unit for generating a magnetic field which extends into said focusing plane,
- a second slide (57), to which the magnetic unit is secured,
- a second rectilinear guide means (55) for the second slide, which second rectilinear guide means, at least during operation, extends parallel to the first rectilinear guide means,
- a second slide-drive unit (103) for driving the second slide, and
- a control for positioning the first slide and the second slide,
characterized in that the first slide-drive unit (101) and the second slide-drive unit (103) each being constructed as a linear motor having a stationary section secured to the frame (1) and having a movable section secured to the first slide (17) and the second slide (57), respectively, the control comprising a measurement and control system for positioning the optical unit (19) and the magnetic unit (59) relative to one another at least during operation, which system comprises a measurement means for measuring the mutual position of both slides and is electrically connected to a coil (104, 109) of at least one of the linear motors.

2. A device as claimed in Claim 1, characterized in that the measurement and control system comprises an optical distance meter (113) which is arranged on one of the slides 17, 57) to cooperate with a reflecting surface (117) of the other slide and which is connected to an electronic control unit.

3. A device as claimed in Claim 1, characterized in that an incremental measurement ruler (119, 121) and an optical detector (123, 125) of the measurement and control system are arranged near each of the drive units (101, 103), which detectors are electronically coupled to one another by a microprocessor.

## Patentansprüche

1. Einrichtung zum Einschreiben und/oder Auslesen eines magnetooptischen Informationsträgers, mit
- einem Gestell (1) mit einem um eine Drehungsachse drehbaren Plattenteller (5) zum Auflegen des Informationsträgers,
- einem ersten Schlitten (17) mit einer optischen Einheit (19), die mit einem Objektiv zum Konzentrieren eines Strahlungsbündels zu mindestens einem Strahlungsflecken in einer Fokussierebene versehen ist,
- einer auf dem Gestell angeordneten ersten Geradeführung (15) für den ersten Schlitten sowie einer ersten Schlittenantriebseinheit (101), und
- einer, in der Richtung der genannten Drehungsachse gesehen, gegenüber und in einem Abstand von der optischen Einheit angeordneten verschiebbaren Magneteinheit (59) zum Erzeugen eines sich bis in die genannte Fokussierebene erstreckenden Magnetfeldes,
- einen zweiten Schlitten (57), an dem die magnetische Einheit befestigt ist,
- eine zweite Geradeführung (55) für den zweiten Schlitten, wobei diese zweite Geradeführung wenigstens im Betrieb sich parallel zu der ersten Geradeführung für den erstgenannten Schlitten erstreckt,
- eine zweite Schlittenantriebseinheit (103) zum Antreiben des zweiten Schlittens, sowie
- ein Steuersystem zum Ausrichten des ersten und zweiten Schlittens,
dadurch gekennzeichnet, daß die erste Schlittenantriebseinheit (101) und die zweite Schlittenantriebseinheit (103) je als Linearmotor ausgebildet sind mit einem an dem Gestell (1) befestigten ortsfesten Teil und einem an dem Schlitten (17) bzw. dem zweiten Schlitten (57) befestigten ortsbeweglichen Teil, wobei die Steuerung ein Meß- und Steuersystem aufweist zum wenigstens im Betrieb Ausrichten der optischen Einheit (19) und der Magneteinheit (59) gegenüber einander, wobei dieses Systen ein Meßmittel aufweist zum Messen der gegenseitigen Lage der beiden Schlitten und mit einer Spule (104, 109) wenigstens eines der Linearmotoren elektrisch verbunden ist.

2. Einrichtung nach Anspruch 1, **dadurch gekennzeichnet**, daß das Meß- und Steuersystem ein auf einem der Schlitten (17, 57) angeordnetes optisches Distanzmeßinstrument (113) aufweist, das mit einer reflektierenden Fläche (117) des anderen Schlittens zusammenarbeitet und mit einer elektronischen Steuereinheit verbunden ist.

3. Einrichtung nach Anspruch 1, **dadurch gekennzeichnet**, daß in der Nähe jeder der Antriebseinheiten (101, 103) ein feinverteiltes Meßlineal (119, 121) und ein optischer Detektor (123, 125) des Meß- und Steuersystems angeordnet sind, wobei die Detektoren von einem Mikroprozessor elektronisch miteinander gekoppelt sind.

## Revendications

1. Dispositif pour l'enregistrement et/ou la lecture d'un support d'information magnéto-optique, comprenant
- un châssis (1) présentant une plaque rotative (5) qui peut tourner autour d'un axe de rotation pour supporter le support d'information,
- un premier chariot (17) comprenant une unité optique (19) qui est munie d'un objectif pour concentrer un faisceau de rayonnement afin de former un spot de rayonnement dans un plan de focalisation,
- un premier moyen de guidage rectiligne (15) pour le premier chariot, disposé sur le châssis, et une première unité d'entraînement de chariot (101),
- une unité magnétique mobile (59) qui, vue le long dudit axe de rotation, est disposée vis-à-vis et d'une façon espacée de l'unité optique pour engendrer un champ magnétique qui s'étend dans ledit plan de focalisation,
- un deuxième chariot (57) auquel est fixée l'unité magnétique,
- un deuxième moyen de guidage rectiligne (55) pour le deuxième chariot, lequel deuxième moyen de guidage rectiligne s'étend, au moins pendant le fonctionnement, parallèlement au premier moyen de guidage rectiligne,
- une deuxième unité d'entraînement de chariot (103) pour entraîner le deuxième chariot et
- une commande pour positionner le premier chariot et le deuxième chariot,
caractérisé en ce que la première unité d'entraînement de chariot (101) et la deuxième unité d'entraînement de chariot (103) sont réalisées chacune comme un moteur linéaire présentant une partie stationnaire fixée au châssis (1) et présentant une partie mobile fixée respectivement au premier chariot (17) et au deuxième chariot (57), la commande comprenant un système de mesure et de commande pour positionner l'unité optique (19) et l'unité magnétique (59) l'une par rapport à l'autre au moins pendant le fonctionnement, lequel système comprend un moyen de mesure pour la mesure de la position mutuelle des deux chariots et est connecté électriquement à une bobine (104, 109) d'au moins l'un des moteurs linéaires.

2. Dispositif selon la revendication 1, caractérisé en ce que le système de mesure et de commande comprend un dispositif de mesure de distance optique (113) qui est disposé sur l'un des chariots (17, 57) pour coopérer avec une surface réflectrice (117) de l'autre chariot et qui est connecté à une unité de commande électronique.

3. Dispositif selon la revendication 1, caractérisé en ce qu'une règle de mesure incrémentielle (119, 121) et un détecteur optique (123, 125) du dispositif de commande et de mesure sont disposés près de chacune des unités d'entraînement (101, 103) lesquels détecteurs sont couplés par voie électronique l'un à l'autre par un microprocesseur.
